# FASCICULE DE BREVET EUROPEEN

(11) **EP 4 304 885 B1**
(45) Date de publication et mention de la délivrance du brevet: **16.07.2025**
(21) Numéro de dépôt: 22708583.4
(22) Date de dépôt: 01.02.2022
(51) Int. Cl.: B60K 35/00, B60K 35/10, B60K 35/22, B60K 35/28, B60K 35/60

(54) **VÉHICULE AUTOMOBILE AFFICHANT SUR UN ÉCRAN DUDIT VÉHICULE, DES INTERFACES GRAPHIQUES D'AIDE A LA CONDUITE**
KRAFTFAHRZEUG, DAS AUF EINEM BILDSCHIRM DIESES FAHRZEUGS GRAPHISCHE SCHNITTSTELLEN ZUR FAHRHILFE ANZEIGT
MOTOR VEHICLE DISPLAYING ON A SCREEN OF SAID VEHICLE, GRAPHIC DRIVING ASSISTANCE INTERFACES

(30) Priorité: 11.03.2021 FR 2102375
(43) Date de publication de la demande: 17.01.2024
(73) Titulaire: Stellantis Auto SAS, 78300 Poissy (FR)
(72) Inventeur: FERON, Stephane, 92350 LE PLESSIS ROBINSON (FR); NIELOT, Audrey, 91570 BIEVRES (FR); ALLEAU, Chloe, 75012 PARIS 12 (FR); TAHHAN, Aref Antoine, 78170 LA CELLE ST CLOUD (FR); MOTTIER, Romain, 91100 CORBEIL ESSONNES (FR); NICOLAS, Laurent, 92800 PUTEAUX (FR)
(74) Mandataire: ESIP
(86) Numéro de dépôt international: PCT/FR2022/050171
(87) Numéro de publication internationale: WO 2022/189713

(56) Documents cités:
- EP-A1- 3 269 579
- DE-A1- 102015 207 025
- US-A1- 2019 283 770

## Description

La présente invention revendique la priorité de la demande française 2102375 déposée le 11.03.2021.

La présente invention concerne de manière générale les interfaces graphiques et en particulier les combinés d'instrumentation de véhicules automobiles comportant au moins un écran permettant de visualiser les informations graphiques en rapport avec des fonctions d'aide à la conduite. Elle concerne plus particulièrement un véhicule automobile affichant sur un écran dudit véhicule, des interfaces d'aide à la conduite.

Les interfaces graphiques permettent entre autres, de représenter graphiquement à l'utilisateur (conducteur) les fonctions d'aide à la conduite sélectionnées par le conducteur, au travers d'une IHM dédiée (Interface Homme-Machine).

Les combinés d'instrumentation, intégrés à la planche de bord du véhicule, sont habituellement disposés derrière le volant de direction dans l'axe de vision directe du conducteur, de sorte que ce dernier puisse consulter les informations affichées sans avoir à détourner son regard de la route. Ces dernières années ont vu l'apparition de combinés d'instrumentation entièrement numériques comportant un écran d'affichage LCD à matrice active (LCD-TFT) en lieu et place des cadrans analogiques à aiguilles. « LCD » et « TFT » sont les acronymes anglosaxons pour respectivement « Liquid Crystal Display » et « Thin Film Transistor ».

Ces combinés d'un nouveau type qui offrent une très bonne qualité d'image en termes de résolution, de contraste et de luminosité, sont en outre configurables par le conducteur du véhicule qui peut ainsi choisir au moins en partie les modules qu'il souhaite voir s'afficher sur l'écran ainsi que le style d'affichage (cadrans à aiguilles similaires aux cadrans analogiques ou bien affichage sous la forme de graduations ou de chiffres traduisant la valeur de la grandeur concernée) et l'ambiance du combiné (sobre avec fond d'éclairage de couleur sombre, ou sportif avec fond d'éclairage de couleur vive). Ces combinés numériques permettent également de piloter un certain nombre de fonctions du véhicule (climatisation, système audio, verrouillage centralisé, éclairage, aide à la conduite, etc.) via des moyens de commande agencés sur le volant ou déportés au niveau de la console centrale du véhicule.

Les systèmes d'aide à la conduite également désignés par « ADAS » (acronyme anglosaxon pour « Advanced Driver-Assistance System ») se développent de plus en plus sur les véhicules automobiles et offrent des fonctions s'approchant d'une conduite semi-autonome (ou mode de conduite délégué de niveau 2) voire complétement autonome. Ces fonctions comprennent notamment la régulation de vitesse adaptative ou « ACC » (acronyme anglosaxon pour « Adaptive Cruise Control ») désignée également par « régulation longitudinale », et le maintien du véhicule dans sa voie, désigné également par « LPA » (acronyme anglosaxon pour « Lane Positionning Assist ») désignée également par « régulation latérale ». Ces fonctions d'aide à la conduite, et éventuellement d'autres fonctions d'aide à la conduite tel que le freinage d'urgence, sont généralement regroupées sous le vocable anglosaxon de « Drive Assist » désignant le mode de conduite semi-autonome, ou encore « HIA » (acronyme anglosaxon pour « Highway Integrated Assist ») ; ces fonctions étant particulièrement adaptées pour une conduite sur voie rapide telle qu'une autoroute. Le véhicule est ainsi capable de contrôler sa trajectoire et sa vitesse dans sa voie sans l'intervention du conducteur une fois que ce dernier à sélectionner la commande « Assist » (pour « Drive Assist »).

Pour activer ce mode de conduite, l'utilisateur doit aujourd'hui activer deux commandes distinctes, une première pour la régulation « longitudinale » (ACC) du véhicule et une autre pour la régulation « latérale » (LPA) du véhicule. Des interfaces graphiques s'affichent sur l'écran du combiné pour chacune des fonctions activées.

Avec ce type d'interfaces connues, l'utilisateur n'est pas en mesure de comprendre l'impact de ces deux commandes sur le comportement du véhicule, ni de savoir dans quel ordre il doit les activer pour pouvoir exploiter ces aides à la conduite de manière optimale.

On connait du document DE102015207025 A1 un système d'assistance au conducteur dans un véhicule automobile qui réalise des interventions de guidage transversal actives (notamment des interventions de direction) et qui peut être activé indépendamment de l'activation d'un système de régulation longitudinale. Le système peut être activé aussi bien avec que sans la régulation longitudinale et comprend à la fois une fonction partielle d'assistance en embouteillage et une fonction partielle d'assistance au guidage sur la bande de circulation. Les deux fonctions partielles peuvent être activées et désactivées en commun par le biais d'une seule touche Marche/Arrêt (STA/ALC).

L'invention consiste à proposer au conducteur du véhicule des interfaces graphiques simples et intuitives réduisant sa charge mentale au moment de la sélection du mode de conduite et durant tout le temps de l'activation dudit mode de conduite.

A cet effet, la présente invention a pour objet un véhicule automobile comportant un système d'aide à la conduite fournissant au conducteur dudit véhicule, une première fonction d'aide à la conduite et une fonction d'aide à la conduite fonctionnellement complémentaire de la première et qui combinée avec la première définit une deuxième fonction d'aide à la conduite, des moyens de gestion d'affichage couplés audit système d'aide à la conduite pour afficher des première et deuxième interfaces graphiques en rapport respectivement avec lesdites première et deuxième fonctions d'aide à la conduite, dans une première zone d'affichage reconfigurable d'un écran dudit véhicule, ledit système d'aide à la conduite comportant un moyen de commande unique agencé pour activer lesdites première et deuxième fonctions d'aide à la conduite et pour commander l'affichage successif desdites interfaces, suivant un ordonnancement déterminé et imposé par la complémentarité fonctionnelle des première et deuxième fonctions d'aide à la conduite.

Selon une caractéristique, les moyens de gestion d'affichage sont agencés pour afficher une troisième interface graphique suivant immédiatement la deuxième interface graphique relative à la deuxième fonction d'aide à la conduite ; ladite troisième interface graphique portant une information de désactivation des première et deuxième fonctions d'aide à la conduite.

Selon une autre caractéristique, les moyens de gestion d'affichage sont agencés pour afficher au moins une information graphique principale représentative de la fonction portée par chacune des interfaces graphiques, dans chacune desdites interfaces graphiques.

Selon une autre caractéristique, les moyens de gestion d'affichage sont agencés pour afficher au moins une ligne de texte nommant la fonction portée par chacune des interfaces graphiques, dans chacune desdites interfaces graphiques, en plus de l'information graphique principale.

Selon une autre caractéristique, ledit moyen de commande unique comporte des moyens de temporisation aptes à activer la fonction d'aide à la conduite correspondant à l'interface graphique affichée à l'écran à l'expiration d'une durée d'affichage déterminée par les moyens de temporisation.

Selon une autre caractéristique, lesdits moyens de gestion d'affichage sont en outre agencés pour afficher dans une deuxième zone d'affichage de l'écran, de plus petite taille que la première zone, l'information graphique principale de l'interface graphique à l'expiration de la durée d'affichage déterminée.

Selon une autre caractéristique, les moyens de gestion d'affichage sont agencés pour faire disparaitre l'affichage de l'interface graphique affichée, dans la première zone de l'écran, à l'expiration de la durée déterminée par les moyens de temporisation.

Selon une autre caractéristique, les moyens de gestion d'affichage sont agencés pour afficher les interfaces graphiques sous la forme d'un empilement de tuiles de taille décroissante, se chevauchant au moins partiellement ; lesdites tuiles s'étendant selon au moins une même direction déterminée donnant un effet de perspective audit empilement vu par le conducteur du véhicule ; la plus grande tuile de l'empilement, appelée tuile active, occultant le contenu graphique des autres tuiles dudit empilement sans occulter complètement les autres tuiles de l'empilement pour permettre d'identifier le nombre de tuiles donc le nombre de fonctions.

Selon une autre caractéristique, le système d'aide à la conduite comporte des moyens de régulation longitudinale et des moyens de régulation latérale du véhicule ; lesdits moyens de régulation longitudinale fournissant au conducteur la première fonction d'aide à la conduite et lesdits moyens de régulation latérale, coopérant avec lesdits moyens de régulation longitudinale, fournissant la deuxième fonction d'aide à la conduite.

Selon une autre caractéristique, la première fonction d'aide à la conduite est une fonction de régulation longitudinale du véhicule, appelée « ACC », la fonction complémentaire est une fonction de régulation latérale du véhicule, appelée « LPA », et la deuxième fonction d'aide à la conduite est une fonction de conduite semi-autonome, appelée « Drive Assist ».

Outre le fait de ne manipuler qu'une seule commande pour sélectionner plusieurs fonctions d'aide à la conduite, l'invention permet d'éviter les mauvaises combinaisons quand plusieurs fonctions d'aide à la conduite sont disponibles. Ainsi, le contrôle latéral du véhicule dans sa voie (LPA) n'est autorisé que si le control longitudinal (ACC) est déjà sélectionné.

D'autres avantages et caractéristiques pourront ressortir plus clairement de la description qui va suivre, donnée uniquement à titre d'exemple non limitatif et faite en se référant aux dessins dans lesquels :
[Fig. 1] illustre un schéma-bloc d'un véhicule selon l'invention proposant des interfaces graphiques d'aide à la conduite ;
[Fig. 2] illustre une première interface graphique d'aide à la conduite proposée par le véhicule selon l'invention ;
[Fig. 3] illustre une deuxième interface graphique d'aide à la conduite proposée par le véhicule selon l'invention ;
[Fig. 4] illustre une troisième interface graphique d'aide à la conduite proposée par le véhicule selon l'invention ; et
[Fig. 5] illustre une quatrième interface graphique d'aide à la conduite proposée par le véhicule selon l'invention.

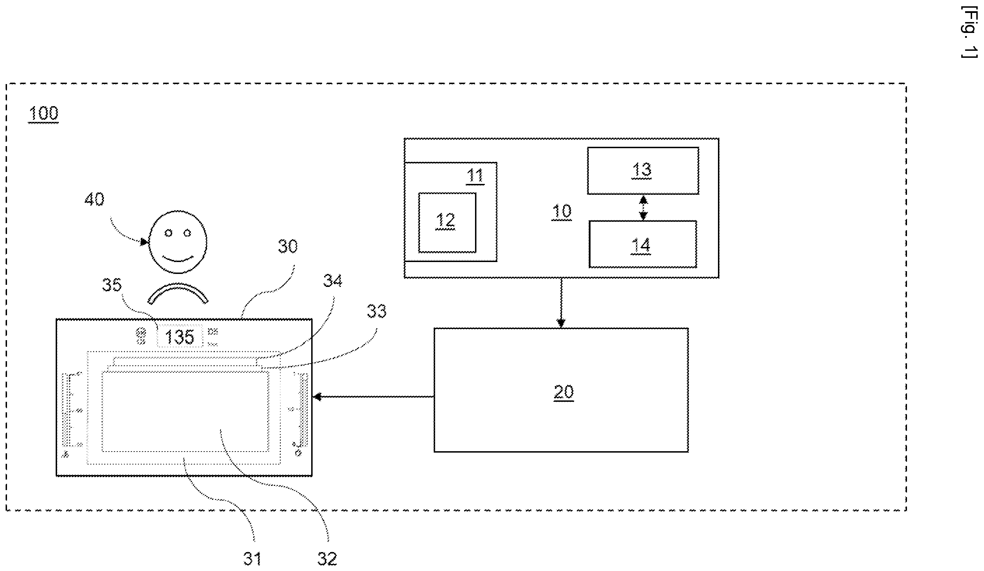

La figure 1 illustre schématiquement sous la forme d'un schéma-bloc, un véhicule automobile 100 selon l'invention comportant un système d'aide à la conduite ADAS 10, des moyens de gestion d'affichage 20 d'interfaces graphiques, couplés au système ADAS 10 et un écran 30 faisant office de combiné d'instrumentation du véhicule 100, comme par exemple un écran TFT, de forme générale rectangulaire. Les moyens de gestion d'affichage 20 sont agencés pour gérer l'affichage, dans une première zone 31 d'affichage provisoire et reconfigurable de l'écran 30, définissant une première fenêtre de forme rectangulaire, d'interfaces graphiques organisées sous la forme d'une superposition de tuiles rectangulaires, (ici trois tuiles 32, 33 et 34), agencées pour former un empilement de pages, ou « tuiles », centrées entre elles et sur l'axe (vertical) médian de la fenêtre 31. Sur la figure, la fenêtre 31 est représentée artificiellement dans l'écran 30 par un rectangle dont le tracé est en trait interrompu.

Les tuiles se chevauchent au moins partiellement et s'étendent selon au moins une même direction déterminée et vers le haut de l'écran 30.

La tuile de l'empilement de plus grande taille, que l'on appellera tuile « active » dans la suite de la description, ici la tuiles 32, occulte le contenu graphique des autres tuiles 33 et 34 de l'empilement sans les occulter complètement.

Les tuiles 32, 33 et 34 sont de taille décroissante en partant de la tuile active 32 qui fait face au conducteur 40 et vers le haut de l'écran 30 vu du conducteur 40, ce qui contribue à donner un effet de perspective à l'empilement vu par le conducteur 40 du véhicule 100. La tuile active 32, faisant face au conducteur 40, masque partiellement les autres tuiles 33 et 34 dont on ne voit que les bords supérieurs dépassant du bord supérieur de leur tuile immédiatement précédente.

Le conducteur 40 peut donc aisément visuellement en déduire le nombre de fonctions d'aide à la conduite offertes par le système ADAS 10 ; le nombre de tuiles correspondant au nombre de fonctions offertes par le système ADAS 10.

Le système ADAS 10 comporte un moyen de commande spécifique et unique 11 pour commander aux moyens de gestion d'affichage 20 d'ouvrir la première fenêtre 31 (l'affichage de l'empilement des tuiles 32 à 34) et gérer le défilement séquentiel des tuiles 32 à 34. Les tuiles 32 à 34 défilent les unes après les autres à chaque appui successif sur le seul et même moyen de commande 11 qui est par exemple du type bouton poussoir. Ce bouton poussoir 11 porte, par exemple, l'inscription visuelle « Assist » correspondant au mode de conduite « Drive Assist ». Un premier appui sur le bouton poussoir 11 commande l'ouverture de la fenêtre 31 avec l'affichage de l'empilement des tuiles 32 à 34 dans un ordre déterminé imposé pour exécuter les fonctions d'aide à la conduite regroupées derrière l'intitulé « Drive Assist ». Ainsi, la première fonction d'aide à la conduite présentée au conducteur 40 à l'ouverture de la fenêtre 31 est la fonction dite ACC ou « Cruise Control » qui est représentée par une première interface graphique portée par la tuile 32. Des appuis successifs sur le bouton poussoir 11 commandent aux moyens de gestion d'affichage 20, le défilement ordonnancé des tuiles 32 à 34.

Le moyen de commande unique 11 comporte des moyens de temporisation 12 aptes à activer la fonction d'aide à la conduite correspondant à la tuile affichée (tuile active) au bout d'une durée d'affichage déterminée par les moyens de temporisation 12.

Avantageusement, les moyens de gestion d'affichage 20 sont agencés pour gérer l'exécution d'une animation visuelle avec des transitions simulant un défilement des tuiles 32 à 34.

L'écran 30 comporte en outre au moins une deuxième zone d'affichage reconfigurable 35, agencée dans la partie supérieure de l'écran 30, entre le bord latéral supérieur de la première zone (fenêtre) 31 et le bord latéral supérieur de l'écran 30. Cette deuxième zone d'affichage 35 affiche par exemple la vitesse courante du véhicule 100. Sur la figure, comme pour la première zone d'affichage (fenêtre) 31, la deuxième zone d'affichage 35 est représentée artificiellement dans l'écran 30 par un rectangle dont le tracé est en trait interrompu.

La taille de la deuxième zone d'affichage 35 est inférieure à celle de la première zone d'affichage (fenêtre) 31.

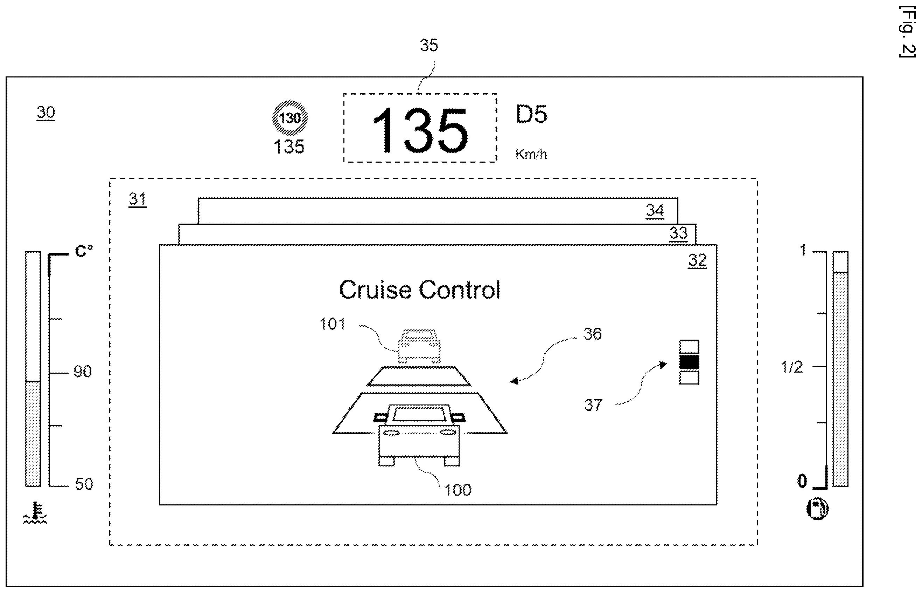

La figure 2 illustre une première interface graphique portée par la première tuile active 32 affichée sur l'écran 30 à l'ouverture de la fenêtre 31. Cette première interface graphique correspond à la première fonction d'aide à la conduite : la fonction ACC. Cette première interface graphique, gérée par les moyens de gestion d'affichage 20, présente dans la partie supérieure de la tuile 32, le nom (en terminologie anglosaxonne) en toutes lettres de la première fonction d'aide à la conduite associée à celle-ci, ici « Cruise Control ». Cette première interface graphique présente l'information graphique principale au centre de la tuile 32. Celle-ci représente symboliquement de manière connue, le véhicule porteur 100 (véhicule disposant des fonctions d'aide à la conduite) et un véhicule cible 101 (véhicule précédant le véhicule porteur 100). Les deux véhicules symbolisés 100 et 101 sont séparés l'un de l'autre par deux barres 36 représentatives de la distance ou temps inter-véhicule généralement désigné par TIV.

Un index de pagination 37, géré également par les moyens de gestion d'affichage 20, est affiché sur la droite de la tuile active 32 sous la forme d'une colonne à trois cases superposées les unes au-dessus des autres. Une première case, correspondant à la tuile active 32, est remplie permettant à l'utilisateur de situer immédiatement le positionnement de la tuile 32 dans l'empilement. La vitesse courante du véhicule 100 est affichée dans la deuxième zone d'affichage 35.

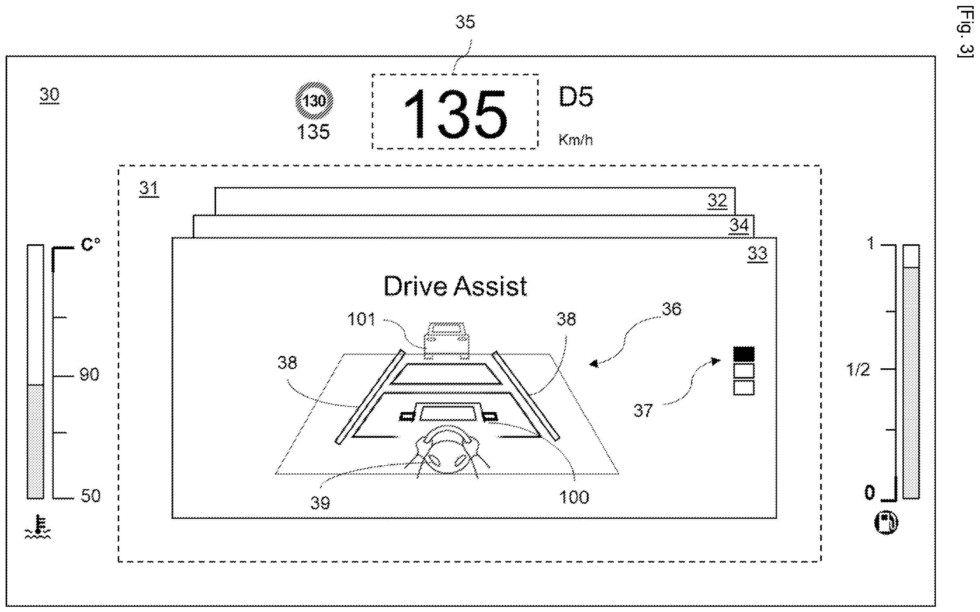

La figure 3 illustre une deuxième interface graphique portée par la deuxième tuile active 33 affichée sur l'écran 30. Cette nouvelle tuile active 33 suit immédiatement la précédente tuile active 32 de la figure 2, à la suite d'un nouvel appui sur le bouton poussoir 11.

Cette tuile active 33 présente une deuxième interface graphique correspondant à la deuxième fonction d'aide à la conduite désignée par la terminologie anglosaxonne « Drive Assist » regroupant la fonction ACC (première fonction d'aide à la conduite proposée) et une autre fonction d'aide à la conduite supplémentaire et complémentaire fonctionnellement de la première fonction d'aide à la conduite, la fonction LPA. Par « complémentarité fonctionnelle », on entend ici que la fonction LPA (régulation latérale) ajoute à la première fonction ACC (régulation longitudinale) une aide à la conduite qui coopère fonctionnellement de manière compatible avec la fonction ACC pour aboutir à une nouvelle fonction d'aide à la conduite (deuxième fonction) fournissant un mode de conduite plus assisté (ou semi-autonome) combinant une régulation longitudinale et une régulation latérale du véhicule dans sa voie de circulation.

La deuxième interface graphique présente dans la partie supérieure de la tuile 33, le nom en toutes lettres de la deuxième fonction d'aide à la conduite associée à celle-ci, ici « Drive Assist ». L'information graphique principale représente symboliquement de manière connue, la même information graphique principale de la tuile 32 en étant enrichie de deux segments de droite 38 symbolisant les bords de la voie de circulation du véhicule porteur 100 et un volant entre les mains du conducteur 39, superposé au véhicule porteur 100, symbolisant habituellement la fonction LPA.

Une deuxième case de l'index de pagination 37, correspondant à la tuile active 33, est remplie permettant à l'utilisateur de situer immédiatement le positionnement de la tuile 33 dans l'empilement. La vitesse courante du véhicule 100 est toujours affichée dans la deuxième zone d'affichage 35.

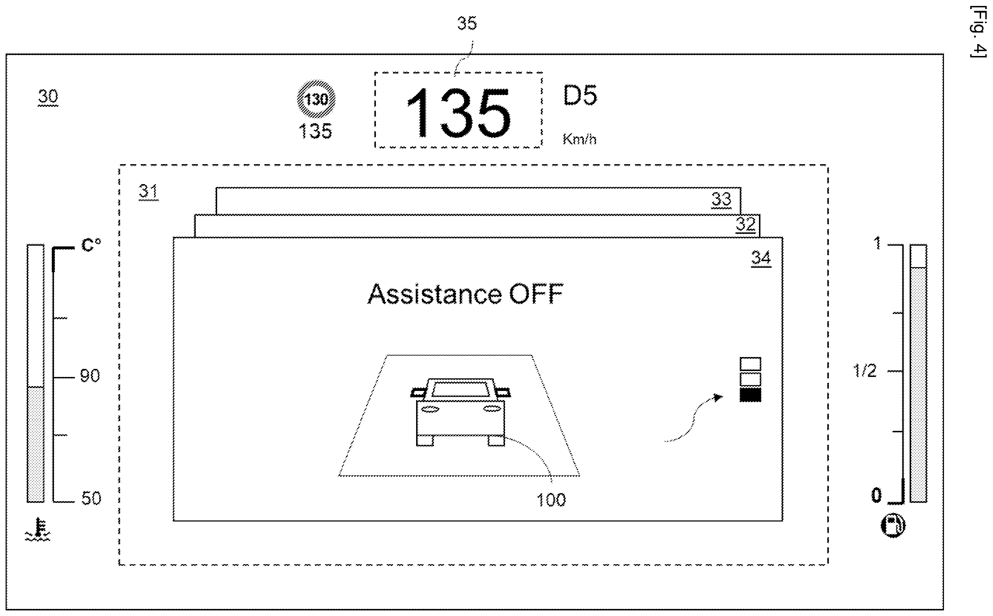

La figure 4 illustre une troisième interface graphique portée par la troisième tuile active 34 affichée sur l'écran 30. Cette nouvelle tuile active 34 suit immédiatement la précédente tuile active 33 de la figure 3, à la suite d'un nouvel appui sur le bouton poussoir 11. Cette tuile active 34 présente la fonction de désactivation de l'affichage des première et deuxième fonctions d'aide à la conduite : « Cruise Control » (première fonction) et « Drive Assist » (deuxième fonction). Cette troisième interface graphique présente dans la partie supérieure de la tuile 34, l'information textuelle de désactivation : « Assistance OFF ». L'information graphique principale représente alors symboliquement de manière connue une vue « dénudée » (sans aide à la conduite) du véhicule 100 dans sa voie de circulation. Une troisième case de l'index de pagination 37, correspondant à la tuile active 34, est remplie permettant à l'utilisateur de situer immédiatement le positionnement de la tuile 34 dans l'empilement. La vitesse courante du véhicule 100 est toujours affichée dans la deuxième d'affichage 35.

Les tuiles sont dites « actives » car la durée de leur affichage, dans la fenêtre 31 délimitant la première zone d'affichage provisoire, détermine l'activation de la fonction d'aide à la conduite correspondant à l'interface graphique portée par la tuile active.

Ainsi, quand une tuile active est affichée et en l'absence de commande du moyen de commande 11 (appui sur le bouton poussoir) au bout d'une durée déterminée et ajustable, par exemple entre 2 et 5 secondes, la fonction d'aide à la conduite ou de désactivation, portée par la tuile active est validée (activée) et la fenêtre 31 se « ferme » : l'affichage des tuiles 32 à 34 dans la première zone d'affichage (fenêtre) 31 disparait (arrêt de l'affichage géré par les moyens de gestion d'affichage 20). D'où, l'expression utilisée d'affichage « provisoire » pour qualifier la fenêtre 31. Mais l'information portée par la tuile active ne disparait pas totalement de l'écran 30.

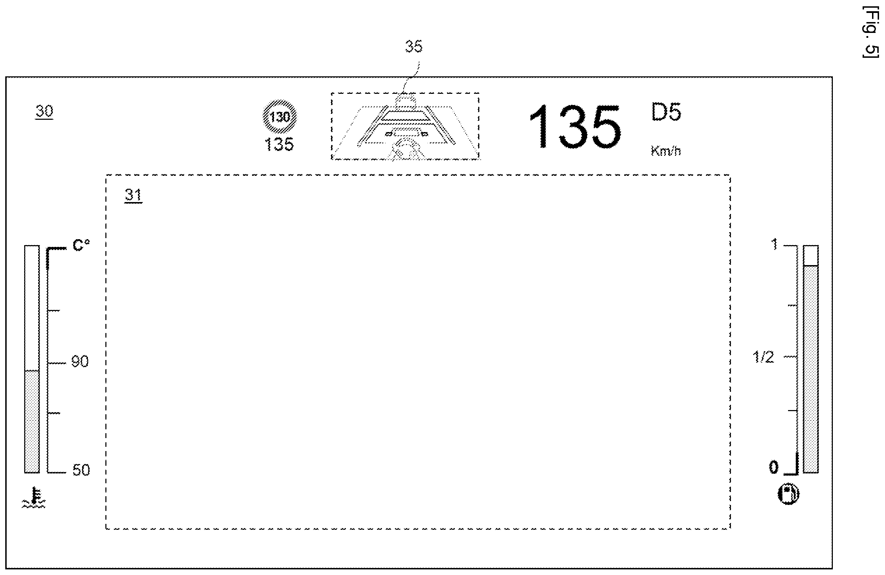

La figure 5 illustre une quatrième interface graphique qui est affichée dans l'écran 30 et gérée par les moyens d'affichage 20, à la suite de la validation de la deuxième fonction d'aide à la conduite : « Drive Assist » correspondant à la tuile active 33. Pour rappel, cette validation fait suite à l'expiration de la durée fixée par les moyens de temporisation 12 sans aucune action (appui) sur le bouton poussoir 11 dans cette durée.

L'information graphique principale, portée par la tuile active 33 est alors aussitôt transférée par les moyens de gestion d'affichage 20, dans la deuxième zone d'affichage 35 se substituant alors à l'information de vitesse courante du véhicule qui est déportée dans une autre zone d'affichage reconfigurable de l'écran 30. La taille de l'information graphique principale est redimensionnée par les moyens de gestion d'affichage 20, avant d'être affichée dans la deuxième zone d'affichage 35 qui est de taille inférieure à la première zone d'affichage (fenêtre) 31.

Cette deuxième zone d'affichage 35 est dite « permanente » en ce qu'elle affiche toujours au moins une information. Dans l'exemple considéré, la deuxième zone 35 affiche soit une information de vitesse du véhicule soit une « réduction » de l'information graphique principale de la dernière tuile active validée.

La fenêtre 31 qui était alors dédiée aux fonctions d'aide à la conduite et à leur désactivation, devient alors disponible pour afficher d'autres interfaces graphiques en rapport, par exemple, avec des fonctions du système de navigation embarqué dans le véhicule.

## Revendications

1. Véhicule automobile (100) comportant un système d'aide à la conduite (10) fournissant au conducteur (40) dudit véhicule (100), une première fonction d'aide à la conduite et une fonction d'aide à la conduite fonctionnellement complémentaire de la première et qui combinée avec la première définit une deuxième fonction d'aide à la conduite, des moyens de gestion d'affichage (20) couplés audit système d'aide à la conduite (10) pour afficher des première et deuxième interfaces graphiques (32, 33) en rapport respectivement avec lesdites première et deuxième fonctions d'aide à la conduite, dans une première zone d'affichage reconfigurable (31) d'un écran (30) dudit véhicule (100), ledit système d'aide à la conduite (10) comportant un moyen de commande unique (11) agencé pour activer lesdites première et deuxième fonctions d'aide à la conduite, **caractérisé en ce que** la commande unique est en outre agencé pour commander l'affichage successif desdites interfaces (32, 33), suivant un ordonnancement déterminé et imposé par la complémentarité fonctionnelle des première et deuxième fonctions d'aide à la conduite.

2. Véhicule (100) selon la revendication précédente, dans lequel les moyens de gestion d'affichage (20) sont agencés pour afficher une troisième interface graphique (34) suivant immédiatement la deuxième interface graphique (33) relative à la deuxième fonction d'aide à la conduite ; ladite troisième interface graphique (34) portant une information de désactivation des première et deuxième fonctions d'aide à la conduite.

3. Véhicule (100) selon l'une des revendications précédentes, dans lequel les moyens de gestion d'affichage (20) sont agencés pour afficher au moins une information graphique principale représentative de la fonction portée par chacune des interfaces graphiques, dans chacune desdites interfaces graphiques.

4. Véhicule (100) selon la revendication précédente, dans lequel les moyens de gestion d'affichage (20) sont agencés pour afficher au moins une ligne de texte nommant la fonction portée par chacune des interfaces graphiques, dans chacune desdites interfaces graphiques, en plus de l'information graphique principale.

5. Véhicule (100) selon l'une des revendications 3 ou 4, dans lequel ledit moyen de commande unique (11) comporte des moyens de temporisation (12) aptes à activer la fonction d'aide à la conduite correspondant à l'interface graphique affichée à l'écran (32 ou 33) à l'expiration d'une durée d'affichage déterminée par les moyens de temporisation (12).

6. Véhicule (100) selon la revendication 5, dans lequel lesdits moyens de gestion d'affichage (20) sont en outre agencés pour afficher dans une deuxième zone d'affichage (35) de l'écran (30), de plus petite taille que la première zone (31), l'information graphique principale de l'interface graphique (32 ou 33) à l'expiration de la durée d'affichage déterminée.

7. Véhicule (100) selon l'une des revendications 5 ou 6, dans lequel les moyens de gestion d'affichage (20) sont agencés pour faire disparaitre l'affichage de l'interface graphique affichée (32 ou 33), dans la première zone (31) de l'écran (30), à l'expiration de la durée déterminée par les moyens de temporisation (12).

8. Véhicule (100) selon l'une des revendications précédente, dans lequel les moyens de gestion d'affichage (20) sont agencés pour afficher les interfaces graphiques sous la forme d'un empilement de tuiles de taille décroissante, se chevauchant au moins partiellement ; lesdites tuiles s'étendant selon au moins une même direction déterminée donnant un effet de perspective audit empilement vu par le conducteur (40) du véhicule (100) ; la plus grande tuile de l'empilement, appelée tuile active, occultant le contenu graphique des autres tuiles dudit empilement sans occulter complètement les autres tuiles de l'empilement pour permettre d'identifier le nombre de tuiles donc le nombre de fonctions.

9. Véhicule (100) selon l'une des revendications précédentes, dans lequel le système d'aide à la conduite (10) comporte des moyens de régulation longitudinale (13) et des moyens de régulation latérale (14) du véhicule (100) ; lesdits moyens de régulation longitudinale (13) fournissant au conducteur (40) la première fonction d'aide à la conduite et lesdits moyens de régulation latérale (14), coopérant avec lesdits moyens de régulation longitudinale (13), fournissant la deuxième fonction d'aide à la conduite.

10. Véhicule (100) selon la revendication précédente, dans lequel la première fonction d'aide à la conduite est une fonction de régulation longitudinale du véhicule (100), appelée « ACC », la fonction complémentaire est une fonction de régulation latérale du véhicule (100), appelée « LPA », et la deuxième fonction d'aide à la conduite est une fonction de conduite semi-autonome, appelée « Drive Assist ».

## Patentansprüche

1. Kraftfahrzeug (100) mit einem Fahrerassistenzsystem (10), das dem Fahrer (40) des Fahrzeugs (100) eine erste Fahrerassistenzfunktion und eine dazu funktionell komplementäre Fahrerassistenzfunktion bereitstellt und mit der ersten eine zweite Fahrerassistenzfunktion definiert, und mit dem Fahrerassistenzsystem (10) gekoppelten Anzeigemanagementmitteln (20) zur Anzeige einer ersten und einer zweiten grafischen Schnittstelle (32, 33) in Verbindung mit der ersten bzw. der zweiten Fahrerassistenzfunktion, Ein erster rekonfigurierbarer Anzeigebereich (31) eines Bildschirms (30) des Fahrzeugs (100), wobei das Fahrunterstützungssystem (10) eine einzige Steuereinrichtung (11) aufweist, die so angeordnet ist, dass sie die erste und die zweite Fahrunterstützungsfunktion aktiviert, **dadurch gekennzeichnet, dass** die einzige Steuerung ferner so angeordnet ist, dass sie die aufeinander folgende Anzeige der Schnittstellen (32, 33) gemäß einer bestimmten und durch die funktionelle Komplementarität der ersten und der zweiten Fahrunterstützungsfunktion vorgegebenen Abfolge steuer.

2. Fahrzeug (100) nach dem vorhergehenden Anspruch, bei dem die Anzeigemanagementeinrichtung (20) so angeordnet ist, dass sie eine dritte grafische Schnittstelle (34) unmittelbar hinter der zweiten grafischen Schnittstelle (33) für die zweite Fahrunterstützungsfunktion anzeigt; wobei die dritte grafische Schnittstelle (34) Informationen zur Deaktivierung der ersten und zweiten Fahrunterstützungsfunktion trägt.

3. Fahrzeug (100) nach einem der vorhergehenden Ansprüche, bei dem die Anzeigemanagementeinrichtung (20) so angeordnet ist, dass sie in jeder der grafischen Schnittstellen wenigstens eine grafische Hauptinformation anzeigt, die die von jeder der grafischen Schnittstellen getragene Funktion darstellt.

4. Fahrzeug (100) nach dem vorhergehenden Anspruch, bei dem die Anzeigemanagementeinrichtung (20) so angeordnet ist, dass sie zusätzlich zu der primären grafischen Information mindestens eine Textzeile anzeigt, die die Funktion benennt, die von jeder der grafischen Schnittstellen in jeder der grafischen Schnittstellen getragen wird.

5. Fahrzeug (100) nach einem der Ansprüche 3 oder 4, bei dem die einzige Steuereinrichtung (11) eine Zeitgebereinrichtung (12) aufweist, die die der auf dem Bildschirm (32 oder 33) angezeigten grafischen Schnittstelle entsprechende Fahrunterstützungsfunktion nach Ablauf einer von der Zeitgebereinrichtung (12) bestimmten Anzeigedauer aktivieren kann.

6. Fahrzeug (100) nach Anspruch 5, bei dem die Anzeigemanagementeinrichtung (20) ferner angeordnet ist, um in einem zweiten Anzeigebereich (35) des Bildschirms (30), der kleiner als der erste Bereich (31) ist, die grafische Hauptinformation der grafischen Schnittstelle (32 oder 33) nach Ablauf der bestimmten Anzeigedauer anzuzeigen.

7. Fahrzeug (100) nach einem der Ansprüche 5 oder 6, bei dem die Anzeigemanagementmittel (20) so beschaffen sind, dass sie die Anzeige der angezeigten grafischen Schnittstelle (32 oder 33) in dem ersten Bereich (31) des Bildschirms (30) nach Ablauf der von den Verzögerungsmitteln (12) bestimmten Zeit verschwinden lassen.

8. Fahrzeug (100) nach einem der vorhergehenden Ansprüche, bei dem die Anzeigemanagementmittel (20) so angeordnet sind, dass sie die grafischen Schnittstellen in Form eines Stapels von Ziegeln abnehmender Größe anzeigen, die sich zumindest teilweise überlappen; wobei die Ziegel sich in mindestens derselben bestimmten Richtung erstrecken, die dem Stapel, wie er vom Fahrer (40) des Fahrzeugs (100) gesehen wird, einen perspektivischen Effekt verleiht; wobei der größte Ziegel des Stapels, der aktive Ziegel genannt wird, den grafischen Inhalt der anderen Ziegel des Stapels ausblendet, ohne die anderen Ziegel vollständig auszublenden Stapeln, um die Anzahl der Fliesen und damit die Anzahl der Funktionen zu ermitteln.

9. Fahrzeug (100) nach einem der vorhergehenden Ansprüche, bei dem das Fahrerassistenzsystem (10) eine Längsreguliereinrichtung (13) und eine Seitenreguliereinrichtung (14) für das Fahrzeug (100) aufweist, wobei die Längsreguliereinrichtung (13) dem Fahrer (40) die erste Fahrerassistenzfunktion bereitstellt und die Seitenreguliereinrichtung (14) mit der Längsreguliereinrichtung (13) zusammenwirkt, die die zweite Fahrerassistenzfunktion bereitstellt.

10. Fahrzeug (100) nach dem vorhergehenden Anspruch, wobei die erste Fahrunterstützungsfunktion eine Fahrzeuglängsregelungsfunktion (100), die als "ACC" bezeichnet wird, ist, die Zusatzfunktion eine seitliche Fahrzeugregelungsfunktion (100), die als "LPA" bezeichnet wird, ist und die zweite Fahrunterstützungsfunktion eine halbautonome Fahrfunktion, die als "Drive Assist" bezeichnet wird, ist.

## Claims

1. A motor vehicle (100) comprising a driving aid system (10) providing the driver (40) of said vehicle (100) with a first driving aid function and a driving aid function functionally complementary to the first driving aid function and which in combination with the first defining a second driving aid function, display management means (20) coupled to said driving aid system (10) for displaying first and second chart interfaces (32, 33) in report with said first and second driving aid functions, respectively, in a first reconfigurable display zone (31) of a screen (30) of said vehicle (100), said driving aid system (10) comprising a single order means (11) arranged to activate said first and second driving aid functions, wherein the single order is further arranged to order the successive display of said interfaces (32, 33), according to a determined scheduling and imposed by the functional complementarity of the first and second driving aid functions.

2. Vehicle (100) according to the previous claim, wherein the display management means (20) are arranged to display a third chart interface (34) immediately following the second chart interface (33) relating to the second driving aid function; said third chart interface (34) carrying information for deactivating the first and second driving aid functions.

3. Vehicle (100) according to one of the previous claims, wherein the display management means (20) are arranged to display at least one main chart information representative of the function carried by each of the chart interfaces, in each of said chart interfaces.

4. Vehicle (100) according to the previous claim, wherein the display management means (20) are arranged to display at least one line of text naming the function carried by each of the chart interfaces, in each of said chart interfaces, in addition to the main chart information.

5. Vehicle (100) according to either of claims 3 and 4, in which the said single order means (11) comprises time-delay means (12) capable of activating the driving aid function corresponding to the chart interface displayed on the screen (32 or 33) at the expiration of a display period determined by the time-delay means (12).

6. Vehicle (100) according to claim 5, wherein said display management means (20) are further arranged to display in a second display zone (35) of the screen (30), smaller than the first zone (31), the main chart information of the chart interface (32 or 33) at the end of the determined display period.

7. Vehicle (100) according to one of claims 5 or 6, in which the display management means (20) are arranged to make the display of the displayed chart interface (32 or 33) disappear, in the first zone (31) of the screen (30), at the expiration of the period determined by the timing means (12).

8. Vehicle (100) according to one of the previous claims, wherein the display management means (20) are arranged to display the chart interfaces as a stack of tiles of decreasing size, overlapping at least partially; said tiles extending according to at least one same determined management giving a perspective effect to said stack seen by the driver (40) of the vehicle (100); the largest tile of the stack, called a activate tile, concealing the chart content of the other tiles of said stack without completely concealing the other tiles of the stack to make it possible to identify the quantity of tiles and therefore the quantity of functions.

9. Vehicle (100) according to one of the previous claims, wherein the driving aid system (10) comprises longitudinal regulation means (13) and lateral regulation means (14) of the vehicle (100); said longitudinal regulation means (13) supplying the driver (40) with the first driving aid function and said lateral regulation means (14), cooperating with said longitudinal regulation means (13), supplying the second driving aid function.

10. Vehicle (100) according to the previous claim, wherein the first driving aid function is a longitudinal regulation function of the vehicle (100), called "ACC", the complementary function is a lateral regulation function of the vehicle (100), called "LPA", and the second driving aid function is a semi-autonomous driving function, called "Drive Assist".
